# EUROPEAN PATENT SPECIFICATION

(11) **EP 2 479 441 B1**
(45) Date of publication and mention of the grant of the patent: **23.10.2019**
(21) Application number: 12000346.2
(22) Date of filing: 20.01.2012
(51) Int. Cl.: F16B 33/00, B65D 39/08, B65D 59/02

(54) **Threaded plastic plug for forced screwing**
Kunststoffstecker mit Gewinde für zwangsweises Schrauben
Prise en plastique filetée pour vissage forcé

(30) Priority: 24.01.2011 IT RN20110001
(43) Date of publication of application: 25.07.2012
(73) Proprietor: Polykap S.R.L., 47891 Falciano (SM)
(72) Inventor: Luppi, Davide, 40122 Bologna (BO) (IT)
(74) Representative: Montebelli, Marco

(56) References cited:
- US-A- 5 302 068
- US-A1- 2004 045 965
- US-A1- 2008 019 795
- US-A1- 2008 128 206
- US-S- D 545 404

## Description

This invention relates to a threaded plastic plug for forced and facilitated screwing.

In the prior art there are already threaded plugs, made of plastic material, intended for industrial use, designed to be inserted with forced screwing and tightening in a hole of a generic recipient unit. Such plugs are used for the most diverse purposes, including, for example, blocking holes, protecting them from any damage, covering them for functional or aesthetic reasons, making them airtight or watertight, marking them, hermetically sealing them, etc.

A prior art type of such plugs has an overall single-piece structure, having a longitudinal axis of symmetry. It basically has three identifiable fundamental parts: a body, a flange and a head, parts which are positioned one after another longitudinally relative to the axis of symmetry.

The plug body is substantially cylindrical, hollow inside, and has a profile wall in which an outer thread is made, this thread being designed to couple with a matching thread made in the hole which will receive the plug.

The flange is basically ring-shaped, and is interposed between the body and the head. It projects transversally to the axis of the plug relative to both the body and the head. When the plug is used the flange is designed to make contact with a section of the surface of the unit surrounding the hole, applying a thrust action on it as a result of screwing, the thrust action being more intense the higher the tightening torque used for forced screwing of the plug into the hole.

The head has the shape of a tubular solid with a prismatic profile, extending over a short axial length, projecting from the opposite side of the flange to that from which the body projects.

The tubular solid has a large inner cavity which, laterally, is surrounded by a thick wall, having the shape of a closed ring and with even, constant thickness. The inner cavity also has a closed end, formed by the flange. A large opening located at the top of the tubular solid allows access from outside to the inner cavity of the plug head.

In the prior art plugs described above the head has various types of coupling surfaces on which to engage an operating tool for forced screwing or unscrewing of the plug.

Of said coupling surfaces: first coupling surfaces are on the faces of the outer surface of the ring-shaped wall of the tubular solid; second coupling surfaces are in contrast provided by prominent protrusions contained in the cavity.

More particularly, the first outer surfaces are substantially at right angles to the plane in which the flange lies and are shaped and sized in such a way that they can be coupled with an operating tool consisting for example of a standardised, standard-production open-ended wrench or a socket wrench normally used for tightening steel bolts.

The operating tools indicated above - irrespective of their technological production form - always operate by encompassing from the outside the outer surface of the tubular body of the head and couple with that surface with some circumferential play which is always present and cannot be eliminated. The second coupling surfaces, which are in contrast provided by the parallel protrusions inside the cavity, instead together delimit an interposed slot or slit in which a further type of operating tool may be engaged, again of the standardised type for generic usage, in that case represented by a screwdriver which can engage in the slot so as to apply the force necessary for screwing/unscrewing the plug.

As already indicated, the plug is normally made of plastic material. The operating tools of the standard type are in contrast made of high-strength steel and are sized in such a way that they can apply tightening torques whose intensity is suitable for tightening steel bolts fully home. Consequently, due to the high capacity for force which can be generated using these tools, when they are used for fitting/removing plastic plugs, the intensity of the tightening torque must be very carefully modulated so as to always guarantee the correct compromise between plug tightening suitable for the specific functions required of it, and tightening which is not excessive and which is below a limit value which could cause permanent damage to the plug head; damage which is also contributed to by the non-eliminable circumferential play with which the operating tool engages with the first and/or with the second coupling surfaces previously defined.

In practice, when fitting the plugs it may be the case that in order to stay relatively safe regarding the possibility of damaging the plug, the fitter may tend to tighten the plug in a cautious way, less than is necessary to guarantee for example optimum hole airtight or watertight sealing.

That may result in subsequent problems which could lead to damage not just to the mechanical unit which receives the plug, but also, indirectly, to the machine or plant to which that unit is operatively linked.

On the other hand, over-tightening of the plug may cause other, no less serious, problems. In fact, although it is true that a high level of tightening, for example enough to permanently deform the head of the plug, could indirectly provide assurances about the efficiency of the airtight or watertight seal of the plug, it is equally true that if during the operating life of the plug in use it becomes necessary to remove the plug (for example for routine or extraordinary maintenance of the unit or of the parts of the machine which use said unit) any permanent deformation of the plug could even prevent application of the operating wrench, preventing the consequent correct unscrewing and removal. Paradoxically all of that may make routine maintenance work very laborious and expensive, sometimes with the aggravating circumstance that added to such difficulties operating the plug there could be further difficulties operating the tools due to the location of the plug - relative to the unit and/or the plant which uses the plug.

Another significant problem presented by the use of operating tools suitable for tightening steel bolts, relates to the fact that, again due to their capacity for developing intense tightening torques, when screwing in the plug, if the plug thread has not been correctly engaged in the receiving hole thread, it is quite easy to cause permanent damage to the plastic thread of the plug. If that happens, it could result in defects in the hermetic seal, with potential continual dripping of liquids, with the risk of compromising the reliability of the unit which uses the plug.

Therefore, when fitting the plugs, it is important to pay proper attention to the initial screwing step, finding the start of the thread and correctly engaging it in the receiving hole.

In the prior art said operation can be carried out in a relatively short unit time, which however, when multiplied by a large number of products to be worsened by the possible, not infrequent low technical skill and sensitivity of the labourers assigned these operations, meaning that a fitting operation which is relatively simple, when not carried out correctly, can actually become critical for the reliability of the machine which receives the plug.

Document US2008/0019795 discloses a composite drain plug for an automobile engine, with a metal sleeve having an exterior threaded portion and an elongated interior wall defining most of the volume of a thermoplastic core, which includes a shank portion and a head portion.

Document US2004/0045965 discloses a closure plug for blow molded drums having an upstanding internally threaded neck, the plug having an externally threaded sidewall and a circumferentially enlarged head formed with a radially outwardly opening groove therearound.

Document US2008/0128206 discloses a drain bolt for an oil pan having a threaded shank portion, a driving head, and an O-ring placed between an enlarged primary flange and a pair of secondary circular flanges, wherein the seal is between a cylindrical counterbore and the O-ring.

The main aim of the invention is to overcome said disadvantages by providing a plug shaped in such a way that it can receive a tightening torque which may even be very intense, without being subject to permanent deformations which would compromise the functionality of the plug or vice versa the correct nature of any subsequent plug removal operations which might be necessary.

In accordance with that aim, the head of the plug is shaped in such a way that it has walls surrounding the head cavity which have a thickness that is increased at least close to the flange, as well as being located completely inside the head cavity in such a way as to avoid any limitation on the use of plug operating tools made in the standardised form.

Another aim of the invention is to allow the
automatic and correct engagement of the body thread irrespective of the relative position with which the plug is presented to the receiving thread.

The technical features of this invention, in accordance with the above aims, are clear from the content of the claims herein, in particular claim 1, and from any of the claims directly or indirectly dependent on claim 1.

The advantages of this invention are more apparent in the detailed description which follows, with reference to the accompanying drawings which illustrate preferred, non-limiting embodiments of the invention, in which:
- Figures 1, 2 and 3 are respectively an elevation view, a top plan view and a side view of a plug made according to the invention;
- Figure 4 is a perspective view showing the plug in its entirety;
- Figure 5 is a cross-section of the plug in the plane of the line labelled A - A in Figure 2.

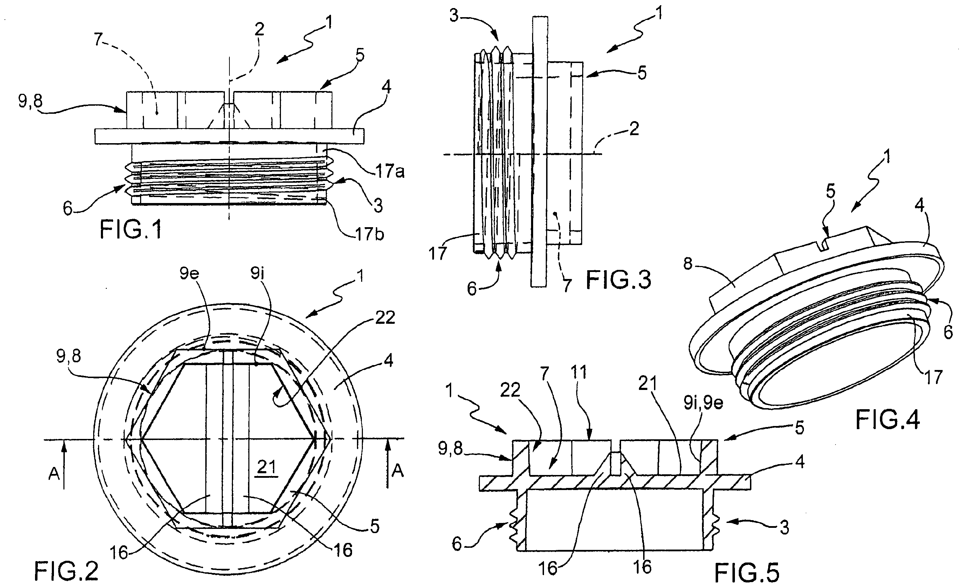

With reference to the accompanying drawings, in Figures 1, 2, 3 the numeral 1 denotes in its entirety a threaded plug 1, intended to be inserted with forced screwing in a hole made in a generic receiving unit, not shown in the accompanying drawings. The plug 1 - preferably made of plastic material - basically comprises a single-piece structure, having a longitudinal axis 2 of symmetry, and formed by: a body 3, a flange 4 and a head 5, which are positioned in an orderly fashion one after another along the axis 2, with the flange 4 interposed between the body 3 and the head 5.

The body 3 [Figures 4 and 5] is hollow inside and, on the outside, has a thread 6, which it is assumed will mate with a matching inner thread in the hole in the unit that will receive the plug 1. The thread 6 is interposed between two smooth cylindrical collars 17a and 17b, one 17a of which is adjacent to the flange 4, while the other 17b is made at one end of the body 3 far from the flange 4.

By comparing Figures 2, 4 and 5 it can be seen that the head 5 has the shape of a prismatic tubular solid 8, with a polygonal profile, which in this particular case is hexagonal. The tubular solid 8 extends longitudinally relative to the axis 2 of the plug 1 over a short length, projecting from the flange 4 on the opposite side of the flange to that from which the body 3 projects.

The tubular solid 8 has an inner cavity 7 which, laterally, is surrounded by a thick wall 9, having the shape of a closed ring; and which is inferiorly delimited by a closed bottom surface 21, formed by the flange 4. At the top of the tubular solid 8 there is an opening 11 allowing access to the inner cavity 7 of the plug head 5.

More particularly, on the outside of the wall 9 of the tubular solid 8 which surrounds the cavity 7 there is a lateral surface 9e which is substantially at a right angle to the plane in which the flange 4 lies, and on the inside of the wall there is an inner lateral surface 9i, correspondingly polygonal, which is oblique relative to the axis 2 of the cavity 7, diverging from it in the direction of travel along the axis 2 from the body 3 to the head 5 of the plug 1.

The thickness of the wall 9 is variable from a minimum located at the access opening 11 to the head 5 inner cavity 7, to a maximum which in contrast is located at the zone where the tubular solid 9 is attached to the flange 4. The variation in the thickness is preferably continuous and linear and is fully obtained inside the cavity 7. In that way, there is a noticeable increase in the strength of the wall 9 of the tubular solid 8 without thereby causing any modification of its outer lateral surface 9e which may therefore be engaged correctly and without any limitation using operating tools of the standardised and standard type.

Returning to the body 3, it can be seen how the presence of the cylindrical collar 17b in the plug 1 means that for correct insertion and initial engagement of the thread 6 in the matching thread of the receiving hole, the fitter does not need to search for the start of the thread. In practice it is sufficient to begin screwing the plug 1 - whatever its condition - in order to make the thread automatically engage correctly, without any action by the fitter, after rotating the plug 1 about its own axis 2 at most through half a round angle. To facilitate the engagement of the thread 6, the first portion 6a of the same grows form the cylindrical collar 17b until the nominal height in at least a half round. Therefore, all of that allows any damage to the plug to be avoided, helping to guarantee its perfect seal and correct tightening, and also helping to reduce both the initial fitting times and the working times required for any subsequent maintenance, with obvious advantages in terms of reducing the related costs of production and/or maintenance.

The invention described above is susceptible of industrial application and may be modified and adapted in several ways without thereby departing from the scope of the invention as defined by the claims.

## Claims

1. A threaded plastic plug (1) comprising a single-piece structure having a longitudinal axis (2) of symmetry, and comprising a head (5), a body (3) with an outer thread (6), and a tightening flange (4) interposed between the head (5) and the body (3), wherein the body (3) comprises a smooth cylindrical collar (17b) preceding the start of the outer thread (6) of the body (3) and designed to allow automatic engagement of the thread irrespective of the relative position with which the plug (1) is presented to the receiving thread; a structure in which the head (5) has the shape of a tubular solid (8) projecting from the flange (4) in a direction parallel with the axis (2) of the plug (1), and comprising an inner cavity (7), accessible from the outside through one end of the solid (8), the cavity (7) being laterally surrounded by a non-circular surface (22) of an annular wall (9) and being inferiorly delimited by a closed bottom surface (21) formed by the flange (4); the plug (1) being **characterised in that** the wall (9) of the tubular solid (8) which surrounds the cavity (7) has a variable thickness, the greater thickness being located close to the flange (4) and completely inside the cavity (7).

2. A threaded plastic plug (1) according to claim 1, **characterised in that** on the outside of the wall (9) of the tubular solid (8) which surrounds the cavity (7) there is a lateral surface (9e) which is substantially at a right angle to the plane in which the flange (4) lies, and on the inside of the wall (9) there is an inner lateral surface (9i) which is oblique relative to the axis (2) of the cavity (7).

3. A threaded plastic plug (1) according to claim 1 or 2, **characterised in that** the thickness of the wall (9) is variable from a minimum located at an access opening (11) to the head (5) inner cavity (7) at the top of the tubular solid (8), to a maximum which is located at the zone where the tubular solid (8) is attached to the flange

4. A threaded plastic plug (1) according to claim 1 or 2 or 3, **characterised in that** the variation of the thickness is continuous and linear.

## Patentansprüche

1. Ein Kunststoffstecker mit Gewinde (1), eine Struktur aus einem einzigen Stück umfassend, die eine symmetrische Längsachse (2) hat, sowie einen Kopf (5), einen Körper (3) mit einem Außengewinde (6) und einen Befestigungsflansch (4) umfassend, der zwischen dem Kopf (5) und dem Körper (3) angebracht ist, wobei der Körper (3) einen glatten, zylinderförmigen Bund (17b) umfasst, welcher vor dem Beginn des Außengewindes (6) des Körpers (3) liegt und konzipiert ist, um das automatische Erfassen des Gewindes zu erlauben, unabhängig von der relativen Position, in der der Stecker (1) dem empfangenden Gewinde entgegengebracht wird; eine Struktur, bei der der Kopf (5) die Form eines röhrenförmigen Festkörpers hat, der aus dem Flansch (4) in einer Richtung herausragt, die parallel zur Achse (2) des Steckers (1) verläuft, und eine innere Aushöhlung (7) umfassend, die von außen durch ein Ende des Festkörpers (8) zugänglich ist, die Aushöhlung (7) ist dabei seitlich von einer nicht-kreisförmigen Oberfläche (22) einer ringförmigen Wand (9) umgeben und unten durch eine geschlossene Bodenfläche (21) begrenzt, welche durch den Flansch (4) gebildet ist; der Stecker (1) ist dabei **dadurch gekennzeichnet, dass** die Wand (9) des röhrenförmigen Festkörpers (8), die die Aushöhlung (7) umringt, eine variable Dicke hat, wobei sich die größere Dicke in der Nähe des Flansches (4) und vollständig innerhalb der Aushöhlung (7) befindet.

2. Ein Kunststoffstecker mit Gewinde (1) nach dem Patentanspruch 1, **gekennzeichnet dadurch, dass** sich an der Außenseite der Wand (9) des röhrenförmigen Festkörpers (8), der die Aushöhlung (7) umringt, eine seitliche Oberfläche (9e) befindet, die im Wesentlichen in einem rechten Winkel zu der Ebene steht, auf der der Flansch (4) liegt, und sich an der Innenseite der Wand (9) eine innere Seitenfläche (9i) befindet, die schräg in Bezug zur Achse (2) der Aushöhlung (7) ist.

3. Ein Kunststoffstecker mit Gewinde (1) nach den Patentansprüchen 1 oder 2, **gekennzeichnet dadurch, dass** die Dicke der Wand (9) variabel ist, von einer Mindestdicke, die sich an einer Zugangsöffnung (11) zu der inneren Aushöhlung (7) des Kopfs (5) an der Spitze des röhrenförmigen Festkörpers (8) befindet, bis zu einer maximalen Dicke, die sich in dem Bereich befindet, wo der röhrenförmige Festkörper (8) am Flansch befestigt ist.

4. Ein Kunststoffstecker mit Gewinde (1) nach den Patentansprüchen 1 oder 2 oder 3, **gekennzeichnet dadurch, dass** die Variation der Dicke kontinuierlich und linear ist.

## Revendications

1. Un bouchon fileté en plastique (1) comprenant une structure monobloc ayant un axe longitudinal (2) de symétrie, et comprenant une tête (5), un corps (3) avec un filetage extérieur (6), et une bride de serrage (4) interposée entre la tête (5) et le corps (3), dans lequel le corps (3) comprend un collier cylindrique lisse (17b) qui précède le début du filetage extérieur (6) du corps (3) et destiné à permettre la mise en prise automatique du filetage indépendamment de la position relative avec laquelle le bouchon (1) est présenté au filetage de réception ; une structure dans laquelle la tête (5) a la forme d'un solide tubulaire (8) dépassant de la bride (4) dans une direction parallèle à l'axe (2) du bouchon (1), et comprenant une cavité intérieure (7), accessible de l'extérieur à travers une extrémité du solide (8), la cavité (7) étant latéralement entourée par une surface non circulaire (22) d'une paroi annulaire (9) et étant inférieurement délimitée par une surface de fond fermée (21) formée par la bride (4) ; le bouchon (1) étant **caractérisé en ce que** la paroi (9) du solide tubulaire (8) qui entoure la cavité (7) a une épaisseur variable, l'épaisseur la plus grande étant située à proximité de la bride (4) et entièrement à l'intérieur de la cavité (7).

2. Le bouchon fileté en plastique (1) selon la revendication 1, **caractérisé en ce qu'**il y a, sur l'extérieur de la paroi (9) du solide tubulaire (8) qui entoure la cavité (7), une surface latérale (9e) qui est essentiellement à angle droit par rapport au plan où se situe la bride (4), et qu'il y a, sur l'intérieur de la paroi (9), une surface latérale intérieure (9i) qui est oblique par rapport à l'axe (2) de la cavité (7).

3. Le bouchon fileté en plastique (1) selon la revendication 1 ou 2, **caractérisé en ce que** l'épaisseur de la paroi (9) est variable depuis un minimum situé au niveau d'une ouverture (11) d'accès à la cavité intérieure (7) de la tête (5) dans la partie supérieure du solide tubulaire (8), jusqu'à un maximum qui est situé au niveau de la zone de fixation du solide tubulaire (8) à la bride.

4. Le bouchon fileté en plastique (1) selon la revendication 1 ou 2 ou 3, **caractérisé en ce que** la variation de l'épaisseur est continue et linéaire.
